(19) Europäisches Patentamt

European Patent Office

Office européen des brevets

(11) Publication number: **0 492 740 A1**

## EUROPEAN PATENT APPLICATION

(21) Application number: **91203401.4**

(22) Date of filing: **23.12.91**

(51) Int. Cl.5: **G05B 19/42**

(30) Priority: **21.12.90 NL 9002864**

(43) Date of publication of application:
**01.07.92 Bulletin 92/27**

(84) Designated Contracting States:
**BE CH DE FR GB LI LU NL SE**

(71) Applicant: **TURBINE SUPPORT EUROPA B.V.**
**Siriusstraat 55**
**NL-5015 BT Tilburg(NL)**

(72) Inventor: **Watton, William Thomas**
**Overhorst 21**
**NL-5707 PP Helmond(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) **Gas turbine engine blade repair.**

(57) A method of refurbishing a gas turbine engine blade by weld build-up and subsequent machining, wherein the method comprises the steps of:
a) measuring the airfoil form;
b) digitising the measured values and storing these values in a computer data network;
c) building-up the worn areas of the blade by welding, during which the weld build-up is controlled by means of the digitised information of the airfoil stored in the computer data network;
d) machining the blade to the required shape, during which the airfoil form of the blade is compared with the digitised information stored in the computer data network;
e) continuing machining until the shape of the airfoil of the blade corresponds within narrow limits to the digitised information of the airfoil stored in the computer data network.

Rank Xerox (UK) Business Services

The present invention relates to a method of refurbishing a gas turbine engine blade by weld build-up and subsequent machining.

This method of refurbishing gas turbine engine blades is nowadays a well established method of extending the useful life of these items.

The degree of precision necessary to refurbish a blade airfoil is generally considerably higher than in the production of new fabricated blades, having regard to envelope and twist tolerances etc., which imposes a requirement to treat each blade individually during repair. For example on a typical high pressure compressor blade the airfoil-envelope tolerance on new blades is +.005" to -.002" relative to nominal form, whilst for repaired blades, the tolerance is only .002" maximum reduction of the existing airfoil section to remove evidence of the weld fusion line. This therefore imposes a requirement to treat each blade individually during refurbishing. Furthermore it is necessary to finish the airfoil in relation to its own unique form and to achieve final tolerance within the accumulated tolerances of the individual stages within the process. Because of the complexity of this, known refurbishing methods of the above mentioned type always have involved some hand working to achieve the necessary standards. And it was always assumed that it is not possible to eliminate the necessity of hand working completely.

It is an object of the present invention to completely eliminate the necessity of hand working in the process of refurbishing a gas turbine engine blade by weld build-up and subsequent machining.

In seeking to devise a process and equipment capable of fulfilling the above objective at first attention was paid to the final machining and finishing steps as being logic to the expert. Further extensive investigations revealed what was necessary and what was in fact achievable at each stage through the process, back to and including welding in order to satisfy the end objective. It was finally surprisingly found out that also the welding step had to be considered to satisfy the end requirements.

Therefore, the object of the present invention can be accomplished by a method of refurbishing a gas turbine engine blade by weld build-up and subsequent machining, characterised in that the method comprises the steps of:

a) measuring the airfoil form;

b) digitising the measured values and storing these values in a computer data network;

c) building-up the worn areas of the blade by welding, during which the weld build-up is controlled by means of the digitised information of the airfoil stored in the computer data network;

d) machining the blade to the required shape, during which the airfoil form of the blade is compared with the digitised information of the airfoil stored in the computer data network;

e) continuing machining until the shape of the airfoil of the blade corresponds within narrow limits to the digitised information of the airfoil stored in the computer data network.

This method according to the invention results in lower costs, higher production rate, less rectification and subsequent loss of products, greater accuracy, etc. Due to the fact that the measured values of the airfoil form are digitised and are stored in a computer data network, this information can readily and easily be used, for instance in combination with information of the design of the particular blade to be refurbished to control the weld build-up and subsequent machining processes. During weld build-up and machining, the airfoil shape (form) of the blade under treatment is constantly or periodically compared with the information stored in the computer data network. This gives adequate results with no need for weld build-up or machining by hand to satisfy the end requirements.

Typically, machining is carried out by milling until the size differs from the digitised information stored in the computer data network by 0.05 to 0.10 mm. followed by grinding to achieve the end requirements including high quality surface finish.

In other circumstances, machining may be carried out by milling only where e.g. very high quality surface finish is not essential, or by grinding only e.g. in the case of certain materials which are difficult to machine.

Advantageously, after machining the airfoil-envelope is measured again in the same sequence for verification, which is prescribed nowadays in refurbishing turbine engine blades.

In a preferred embodiment of the method according to the invention, before measurement of the airfoil, the blade is secured in a clamping device (cassette), which cassette can be located into the measuring device, the welding device and the machining device. This assures proper location of the blade into the several devices, eliminating the need of repeated adjustment. Also, it is now possible to place and remove the blade to and from the various devices with the aid of automation equipment. Use of automation equipment can be further enhanced when prior to the measuring, the welding and the machining the blade is given a bar code, which can be identified by bar-code readers. Before each treatment step, this code is identified and the measured information on the airfoil envelope is stored under this code and can thus be recalled each time the blade is identified. This enables to store the blade temporarily in a depot, resulting in a more flexible opeation leading to completely automated, faster and economical handling.

The method according to the invention can be carried out by an apparatus comprising a labelling machine, a first coordinate measuring machine, a welding machine, a milling machine, and a second coordinate measuring machine, whereby these machines are computer controlled and are connected to a data-memory. The milling machine comprises two high frequency spindles, for instance of the high precision, variable high speed type; one for milling, one for grinding. This is to enable high quality surface finishes to be achieved by grinding, where necessary, or to carry out grinding of difficult to machine material, where milling is difficult or otherwise problematical. In the data-memory, the information on the airfoil form is stored, while all information from an individual blade is identified by the bar code of the blade given by the labelling machine. To identify an individual blade, the first and second measuring machine, the welding machine and the milling machine each comprise a bar code reader. Also, each machine comprises a quick fastening device for repeatedly locating the clamping device (cassette) with the blade in a predetermined position. There is a depot between each machine to store the blade temporarily. This apparatus according to the present invention allows complete automated processing, with a very high level of flexibility to process different types of blades in any sequence in an effective, efficient and economical way with a degree of capacity utilization as high as possible.

The present invention will now be described more in detail with reference to the accompanying drawings in which:

Fig. 1 is a perspective schematic view of a blade to be refurbished;

Fig. 2 is a diagrammatic view of an embodiment of the apparatus to carry out the method according to the present invention illustrating in particular the data collection and data transmittal network.

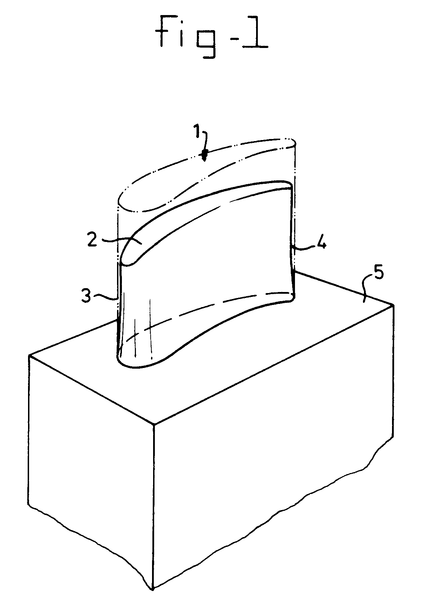

Fig. 1 shows a worn gas turbine engine blade 1. Wear can be expected for instance at the tip 2, the leading edge 3, the trailing edge 4. All these worn areas can be refurbished using the method according to the present invention. The blade 1 is secured in a clamping device 5, which is only diagrammatically illustrated. This clamping device 5 (cassette) can be located into the several machines within the system to carry out the method of refurbishing, a technique which is known per se, but which is very advantageously concerning this invention and which enables complete automation, including transportation between the several machines. The clamping device 5 can for instance be provided with a bar code (not shown), to automatically identify a particular blade 1 by bar-code readers. This assures for instance that the blade 1 is always controlled by the correct data during it's treatment. It also prevents the treatment of blades out of sequence, thus ensuring there cannot be damage to blades or machines or the other equipment within the system. Also, other types of identification can be used, but bar codes are preferred.

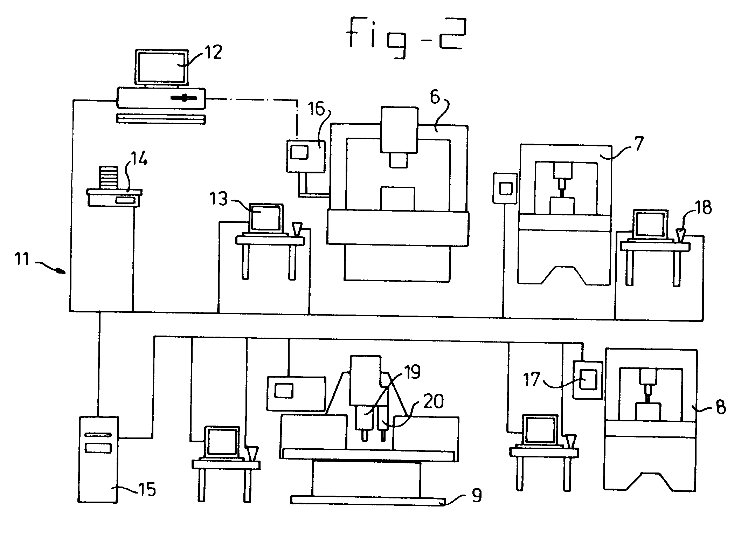

The blade 1 of fig. 1 can be refurbished with the aid of a series of machines and equipment as shown in fig. 2. Fig. 2 illustrates a computerised measuring machine 6, a computer controlled welding machine (in this instance two machines) 7, 8, and a computer controlled milling machine 9 appropriately adapted for the purpose of this technique. All these machines are connected to a computer data network 11, comprising several monitoring and control stations 12, 13, a bar-code printer 14, a host computer/file server 15, and several interfaces 16, 17, together with a series of bar-code readers 18, which uniquely control parts at each work station.

Two welding machines 7,8 are used in this embodiment to show that it is possible to carry out particular treatment steps for more than one blade, using the same network. For instance one of those machines can be used to treat blades of one material, and the other to treat blades of a completely different material. Identification of the blades by bar-code readers and/or mechanical safeguards on the clamping device 5 prevents blades being treated by a weld machine dedicated to a different material. All these machines and equipment are known per se, but the particular application, combination and integration is uniquely innovative and the system of refurbishment by automatic welding and machining controlled by the initially measured airfoil without recourse to hand working is made possible.

The method according to the invention can be carried out as follows:

The blade 1 of fig. 1 is loaded in the clamping device 5 which is then allocated a bar-code identification. The loaded cassette is transferred via a bar-code reader into the computerised measuring machine 6. In this stage, the airfoil form of the blade is measured and the collected data converted through the associated computer and software into digitised format which is then transmitted to and stored in the data base of the host computer/file server 15 for later use in the subsequent stages of welding and machining.

On completion of measuring and digitising, the loaded clamping device is withdrawn from the measuring machine and than transferred via a bar-code reader to the appropriate computer controlled welding machine 7, 8, or is stored for later treatment when appropriate. The blade is identified by it's bar-code and the relevant information to enable welding to be carried out is called up from the host computer/file server.

After welding the loaded cassette is transferred, again via a bar-code reader, to the computer controlled machining device 9, or again is stored for later treatment when appropriate. The necessary digitised data is called up from the host computer/file server and the machining cycle can be carried out. Machining may comprise milling (milling spindle 19) only or grinding (grinding spindle 20) only or a combination of milling followed by grinding according to consideration of the suitability of the blade material for milling or grinding or of surface finish requirements.

Finally, the completed blade, still held in it's cassette, is transferred to a second measuring machine (not shown) via a bar-code reader for final inspection where the finished airfoil form can be examined in relation to the relavant criteria or compared with the original form. For the same purpose, the completed blade can be transferred back to the computer controlled measuring machine 6 via a bar-code reader.

Transportation of the parts between the different machine-stations is carried out by an automatic transfer system which can be a robot or automated conveyor system or combination according to a particular preference or installation.

Thus, it is shown that the present invention provides for a method to refurbish gas turbine engine blades, which eliminates handworking. In order to achieve this object both the welding and the machining operations need to be controlled by the information on the airfoil form of the individually measured blades. For ease of flexibility, the blade can be stored between all different devices, e.g. measuring, welding and machining. Labelling the individual blade and storing the measured values using this unique code offers complete automation. Milling first, followed by grinding in the same device results in fast operation at high precision. Verification measurements of the completed blade offers automated end quality control and rejected blades can be sent back to be treated again.

**Claims**

1.   A method of refurbishing a gas turbine engine blade by weld build-up and subsequent machining, characterised in that the method comprises the steps of:
a) measuring the airfoil form;
b) digitising the measured values and storing these values in a computer data network;
c) building-up the worn areas of the blade by welding, during which the weld build-up is controlled by means of the digitised information of the airfoil stored in the computer data network;
d) machining the blade to the required shape, during which the airfoil form of the blade is compared with the digitised information stored in the computer data network;
e) continuing machining until the shape of the airfoil of the blade corresponds within narrow limits to the digitised information of the airfoil stored in the computer data network.

2.   A method according to claim 1, wherein the machining is continued until the shape of the blade differs from the digitised information of the airfoil stored in the computer data network within a region from 0.05 to 0.10 mm.

3.   A method according to claim 1, or 2, wherein the machining is carried out initially by milling and finally by grinding.

4.   A method according to any of the proceeding claims, wherein the machining is carried out by grinding.

5.   A method according to any of the proceeding claims wherein the machining is carried out by milling.

6.   A method according to any of the proceeding claims wherein after the machining a verification measurement is carried out, during which the airfoil-envelope measured is compared to the information on the airfoil-envelope of the blade stored in de computer data network.

7.   A method according to any of the proceeding claims wherein before measurement of the airfoil-envelope the blade is secured in a clamping device, which clamping device can be located into the measuring device, the welding device and the machining device in a predetermined position.

8.   A method according to any of the proceeding claims, wherein prior to the measuring, the blade or the clamping device is given an unique code, preferrably a bar code, by which code the blade is identified prior to the measuring, the welding, the machining and possibly the verification measuring, which code is also used to store and recall the digitised information on the shape of the airfoil-envelope of the blade.

9.   A method according to any of the proceeding claims, wherein between the steps of the measuring, the welding, the machining and possibly the verification measuring the blade, possibly connected to the clamping device, is stored in a depot.

10. An apparatus to carry out the method according to any of the proceeding claims, comprising a labelling machine, a first coordinate measuring machine (6), a welding machine (7, 8), a milling machine (9) with two high precision, variable high speed spindles; one for milling (19), one for grinding (20), and a second coordinate measuring machine, whereby these machines are computer controlled and are connected to a data-memory, and whereby the first and second measuring machine, the welding machine and the milling machine comprise a bar code reader and a quick fastening device for repeatedly locating the clamping device with the blade in a predetermined position, and whereby between each machine mentioned a depot is placed to store the blade temporarily.

# fig-1

Fig-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 350 000 (MTU MAINTENANCE) | 1-6,8 | G05B19/42 |
| Y | | 7 | |
| | * the whole document * | | |
| | --- | | |
| Y | EP-A-0 199 961 (AE PLC) | 7 | |
| | * claims 5,12 * | | |
| | --- | | |
| A | PATENT ABSTRACTS OF JAPAN | 7 | |
| | vol. 11, no. 48 (M-561)(2495) 13 February 1987 | | |
| | & JP-A-61 209 858 18 September 1986 | | |
| | * abstract * | | |
| | ----- | | |

TECHNICAL FIELDS SEARCHED (Int. Cl.5 )

G05B

The present search report has been drawn up for all claims

| Place of search | Date of completion of the search | Examiner |
|---|---|---|
| THE HAGUE | 21 FEBRUARY 1992 | CORNILLIE O.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)